# EUROPEAN PATENT APPLICATION

(11) **EP 4 672 738 A1**
(43) Date of publication of application: **31.12.2025**
(21) Application number: 25171832.6
(22) Date of filing: 23.04.2025
(51) Int. Cl.: H04N 19/10, H04N 19/102, H04N 19/134, H04N 19/136, H04N 19/146, H04N 19/147, H04N 19/149, H04N 19/194, H04N 19/142, H04N 19/14, H04N 19/172, H04N 19/179, H04N 19/115

(54) **SELECTIVE FRAMES PROCESSING IN SHOT-BASED ENCODING PIPELINE WITH MULTI-PASS**

(30) Priority: 28.06.2024 US 202418757862
(71) Applicant: INTEL Corporation, Santa Clara, CA 95054 (US)
(72) Inventor: Mahdi, Nader, Maple Ridge, V2X 7G9 (CA)
(74) Representative: Samson & Partner Patentanwälte mbB

(57) **Abstract**

A multi-stage shot encoding pipeline can be made more efficient by having the first-stage or first-pass encoder encode only the relevant frames of a shot, rather than all of the video frames of the shot. Reducing the video frames of the shot that needs to be processed by the first-stage or first-pass encoder can significantly reduce the processing time and storage requirements. Relevant frames can be identified using spatial and temporal characteristics of the video frames in each shot and select only the video frames that have the most relevant information. The spatial and temporal characteristics are already readily available in shot detection, making the solution almost cost-free to implement.

## Description

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an example of a shot-based encoding pipeline, according to some embodiments of the disclosure.
FIG. 5 illustrates an example of shot-based encoding pipeline with selective frames processing, according to some embodiments of the disclosure.
FIG. 6 illustrates an example of shot detection and relevant frames selection, according to some embodiments of the disclosure.
FIG. 7 illustrates determining relevant frames, according to some embodiments of the disclosure.
FIG. 8 depicts a flow diagram of an exemplary method for two-stage shot-based encoding with selective frames processing, according to some embodiments of the disclosure.
FIG. 9 depicts a block diagram of an exemplary computing device, according to some embodiments of the disclosure.

### Detailed Description

### Overview

Video coding is the process of compressing video data for storage, transmission, and playback. Video coding may involve taking a large amount of raw video data and applying one or more compression techniques to reduce the amount of data needed to represent the video while maintaining an acceptable level of visual quality. Some widely used video coding standards include AVC (Advanced Video Coding), HEVC (High Efficiency Video Coding), and AV1 (AOMedia Video 1). Video coding standards may be used in a wide range of applications, including, e.g., video streaming, video conferencing, broadcasting, and more. AV1 is a video coding format (or codec) designed for video transmissions over the Internet. "AV1 Bitstream & Decoding Process Specification" version 1.1.1 with Errata was last modified on 2019-01-18. HEVC, also known as "H.265 ITU-T H.265 (V9) (09/2023)", was approved 2023-09-13. VVC, also known as "ITU-T H.266 (V3) (09/2023)", was approved 2023-09-29. One of the challenges in video coding may include achieving a high level of compression while maintaining visual quality. A high level of compression can be achieved through a combination of techniques, such as motion estimation, prediction, quantization, and entropy coding.

A video may include one or more shots. A shot includes video frames captured from one camera in a single, uninterrupted recording, or a single, uninterrupted rendering of the same scene. Shots can represent continuous sequences of frames captured by a single camera without any interruptions or changes in camera angle. Video frames of a shot may share similar spatial and spatio-temporal characteristics. Video frames of a shot may be visually consistent with each other or have visual continuity. Shots may be separated by shot boundaries representing a scene change or a new shot. The encoding process may include dividing the video into a series of shots and applying one or more compression techniques to each shot individually. The technique is referred to as shot-based encoding. Shot-based encoding can divide a video into shots based on changes in the visual content. Each shot is then encoded separately, allowing for more efficient compression of videos with frequent scene changes.

Shot detection algorithms are used to identify the boundaries of each shot, or shot boundaries, and can incorporate various techniques such as analyzing changes in color, brightness, motion, or texture. A shot boundary may separate two consecutive video frames. Shot detection can identify the boundaries between shots within a video sequence. Shot detection can detect these boundaries that separate video frames, allowing the video to be segmented into individual shots for independent processing. Shot detection can include threshold based methods, which set thresholds for attributes like color histogram similarity or frame-to-frame pixel intensity difference to detect potential shot boundaries. Histogram difference analysis compares histograms of consecutive frames to identify sudden changes indicative of shot transitions. Shot detection can include edge detection algorithms that analyze changes in scene composition, such as transitions or camera movements, by detecting edges in consecutive frames. Shot detection can include motion-based methods that analyze motion patterns between frames, identifying shot boundaries based on sudden changes in motion activity or motion vectors. Additionally, shot detection can include one or more machine learning algorithms that can be trained to classify frames as belonging to the same or different shots based on various features extracted from frames. Hybrid approaches combining multiple techniques for shot detection can enhance the accuracy and reliability of shot boundary detection, catering to different video content and computational complexities.

In addition to shot-based encoding, the encoding process may include adaptive bitrate (ABR) techniques. ABR techniques can be used to deliver video content to viewers with varying network conditions and device capabilities. ABR streaming works by encoding the video at multiple quality levels and resolutions (corresponding to different bitrates), and dynamically adjusting or switching the quality level and resolution (e.g., the bitrate) based on the viewer's network conditions and device capabilities.

To incorporate shot-based encoding with ABR, a multi-stage or multi-pass encoding approach can be used. For example, a two-stage or two-pass encoding approach involving two stages or two passes can be used. In the first-stage or first-pass, a fast encoder can be used to encode each shot using different sets of encoding parameters to obtain different encoded bitstreams having different rates (e.g., R or bitrate) and distortion levels (e.g., D or quality loss). Then, a Convex-Hull algorithm is applied to select one or more optimal sets of encoding parameters for encoding the shot while staying within a target bitrate constraint. The first-stage or the first-pass can quickly produce estimates for one or more optimal sets of encoding parameters that can improve compression efficiency. In the second-stage or second-pass, the encoding process is repeated with a more detailed or slower encoder using the optimal sets of compressions parameters to obtain different encoded bitstreams having different rates (e.g., R or bitrate) and distortion levels (e.g., D or quality loss). Another Convex-Hull can be applied to determine one or more optimal sets of encoding parameters for encoding the shot while staying within a target bitrate constraint. The multi-stage or multi-pass encoding approach can be repeated to determine one or more optimal sets of encoding parameters for encoding the shot for different target bitrates. By using this two-stage encoding approach, multi-stage or multi-pass shot-based encoding can be produce encoded bitstreams at different bitrates, and ABR streaming can be applied to deliver high-quality video to viewers with varying network conditions and device capabilities.

The use of a first-stage or first-pass fast encoder and Convex-Hull algorithms in multiple stages can greatly improve the compression efficiency of the encoding process, resulting in higher quality video with smaller file sizes. While the multi-stage or multi-pass shot-based encoding approach has several benefits, such as the ability to determine optimal sets of encoding parameters to achieve different target bitrates for each shot, the approach can demand more processing power and resources than other encoding methods because the approach involves encoding many presentations of the same shot. This complexity can make the approach more difficult to implement and can demand more advanced hardware and software.

One solution that has been used to address the required long processing time is to use a very fast encoder at the first-stage or first-pass, such as a hardware encoder or a faster preset of the same encoder used in the second-pass or a totally different encoder. At large scale, the very fast encoder used in the first-stage or first-pass of the shot-based encoding process to encode the video sequence into small shots with different quality levels and resolutions can still be a computationally intensive process, especially when encoding high-resolution or high-quality video. Another solution to reduce the processing time is to limit the number of bitstreams having different rates and distortion levels to be produced at each stage or each pass. However, limiting the number of bitstreams to be produced can result in suboptimal encoding parameters which may not be suitable for applications involving efficient compression of high-quality video.

To better address the issue, a multi-stage shot encoding pipeline can be made more efficient by having the first-stage or first-pass encoder encode only the relevant frames of a shot, rather than all of the video frames of the shot. Reducing the video frames of the shot that needs to be processed by the first-stage or first-pass encoder can significantly reduce the processing time and storage requirements. Relevant frames can be identified using spatial and temporal characteristics of the video frames in each shot and select only the video frames that have the most relevant information. By limiting the encoding to the selected relevant frames, the amount of data that needs to be processed and encoded is significantly reduced, which can lead to a reduction in the processing time and storage requirements. For example, video frames that may be coded as skip (copy from previously coded pictures) and will not have a big impact on the size of the output coded streams can be ignored in this first-stage or first-pass of the multi-stage or multi-pass shot-based encoding. By using the relevant frames, such as video frames that can have a significant impact on the rate and distortion of a resulting encoded bitstream, the first-stage or first-pass can still be able to determine or estimate one or more optimal sets of encoding parameters to achieve a target bitrate.

In this approach, the second-stage or second-pass of the shot-based encoding process would not be affected, as the full set of video frames of a shot would still be re-encoded using one or more optimal sets of encoding parameters determined by the first-stage or first-pass.

Relevant frames (e.g., significant video frames, salient video frames, etc.) used herein, are video frames which are considered to be relevant to the encoding process. For example, a relevant frame may consume a lot of bits in the encoded bitstream or has a significant contribution to the rate (or bitrate) of an encoded bitstream. In another example, a relevant frame may have relatively high complexity compared to other non-relevant frames. In yet another example, a relevant frame may significantly impact the resulting rate and distortion of the encoded bitstream.

According to one aspect, spatial and temporal characteristics which are extracted for shot detection and overall shot information serve a dual purpose and are leveraged for relevant frame selection. The spatial and temporal characteristics are already readily available in shot detection, making the solution almost cost-free to implement. The result is a cost-effective technique that allows for accurate determination of relevant frames with minimal additional computational cost. The same characteristics utilized in shot detection can be used for determining whether a video frame is a relevant frame or not. This approach ensures that relevant frame detection becomes almost cost-free when integrated with shot detection, as spatial and temporal characteristics of the video frames and shot boundaries are already identified during shot detection, requiring no additional computational overhead for video frame relevance determination.

According to one aspect, the starting video frame of a shot is considered a relevant frame. The starting video frame is relevant to the encoding process since the starting video frame is to be encoded as a reference frame and can contribute significantly to the bitrate of the encoding process. Whether a video frame is a starting video frame of a shot can be determined from a frame number of the video frame and the overall shot information indicating shot boundaries and/or the frame number of the starting video frame of the shot.

According to one aspect, one or more characteristics of a video frame can be compared against a complexity threshold. If one or more characteristics of a video frame crosses the complexity threshold, the video frame may be considered a relevant frame.

According to one aspect, the complexity threshold can depend on a distance of a particular video frame from a shot boundary that bounds the shot. The thresholding can consider the video frame's proximity to shot boundaries. Video frames close to boundaries are deemed more likely to be relevant to the encoding process. In some embodiments, the complexity threshold can be set lower for video frames closer to a shot boundary than for video frames farther away from the shot boundary.

According to one aspect, the complexity threshold can depend on the characteristics associated with video frames of the shot. Not all shots are created equal, and using a fixed complexity threshold for every shot may not be ideal for detecting relevant frames of a particular shot. The thresholding can consider overall shot information, such as mean, mode, median, minimum, and maximum of characteristics across the video frames of the shot.

According to one aspect, one or more characteristics of a video frame can be input into a classifier model, such as a machine learning model trained on past encoded bitstreams and characteristics extracted for the past encoded bitstreams. The classifier model can output a classification indicating whether the video frame is a relevant frame or not.

According to one aspect, every Nth video frame is determined to be relevant frame. In some embodiments, every Nth video frame is determined to be a relevant frame regardless of results from thresholding and/or the classifier model. N can be set based on overall shot information, such as a total number of video frames of the shot. Ensuring that every Nth video frame is determined to be a relevant frame ensures a minimum number of relevant frames are selected and used in the first-stage or first-pass encoder. Using too few relevant frames may result in suboptimal encoding parameters being chosen, because too few relevant frames may not yield accurate data on rate and distortion for the Convex-Hull algorithm.

According to one aspect, estimated rate and/or estimated distortion can be estimated for video frames which were not selected or considered not relevant to the encoding process. The estimated rate and/or estimated distortion can be added to the measured rate and/or measured distortion (respectively) to form a combined rate and a combined distortion. The combined rates and the combined distortions can be used as the data points for the Convex-Hull algorithm to determine one or more optimal sets of encoding parameters to reach a target bitrate.

Many embodiments described herein refer to a two-stage or two-pass shot encoding pipeline. It is envisioned that the teachings extend to multi-stage or multi-pass shot encoding pipelines. One or more starting stages or passes of a multi-stage or multi-pass shot encoding pipeline can benefit from reduced complexity by identifying relevant frames and encoding the relevant frames only. One or more final stages or passes of the multi-stage or multi-pass shot encoding pipeline would still process all video frames of the shot to produce one or more optimal sets of encoding parameters.

### Video compression

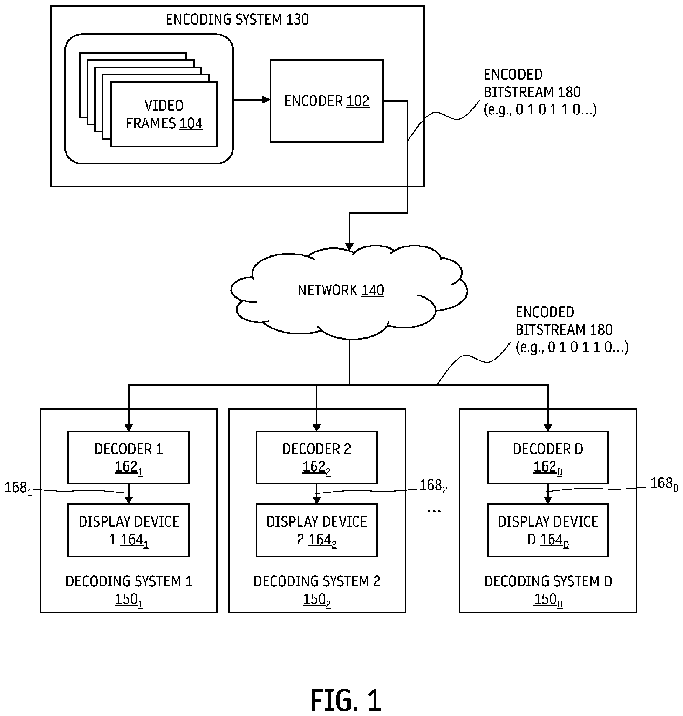

FIG. 1 illustrates encoding system 130 and one or more decoding systems 150_{1...D}, according to some embodiments of the disclosure.

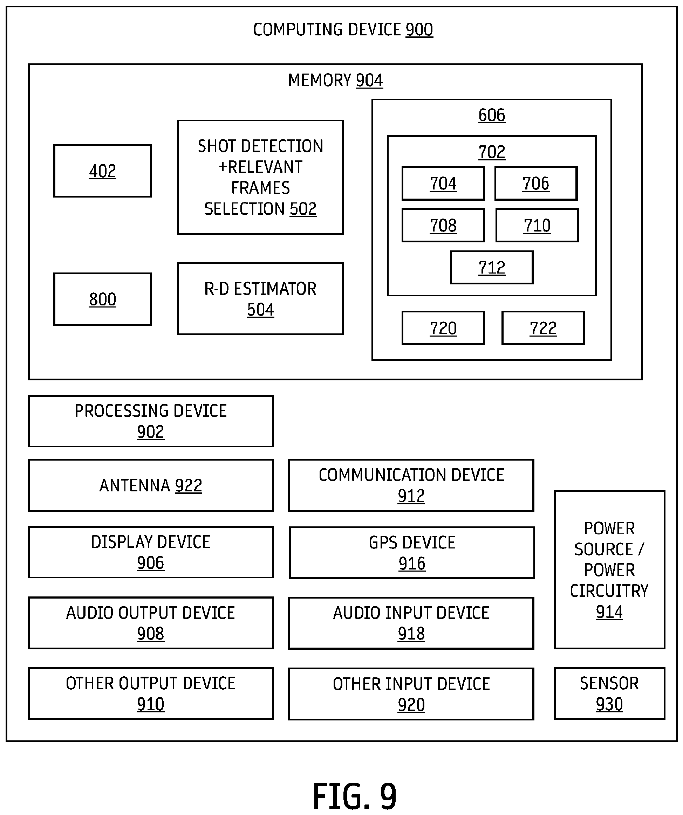

Encoding system 130 may be implemented on computing device 900 of FIG. 9. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen-content, video conferencing content, live event broadcast content, sports content, a surveillance video, a video shot using a mobile computing device (e.g., a smartphone), etc. In some cases, video may include a mix or combination of different types of video.

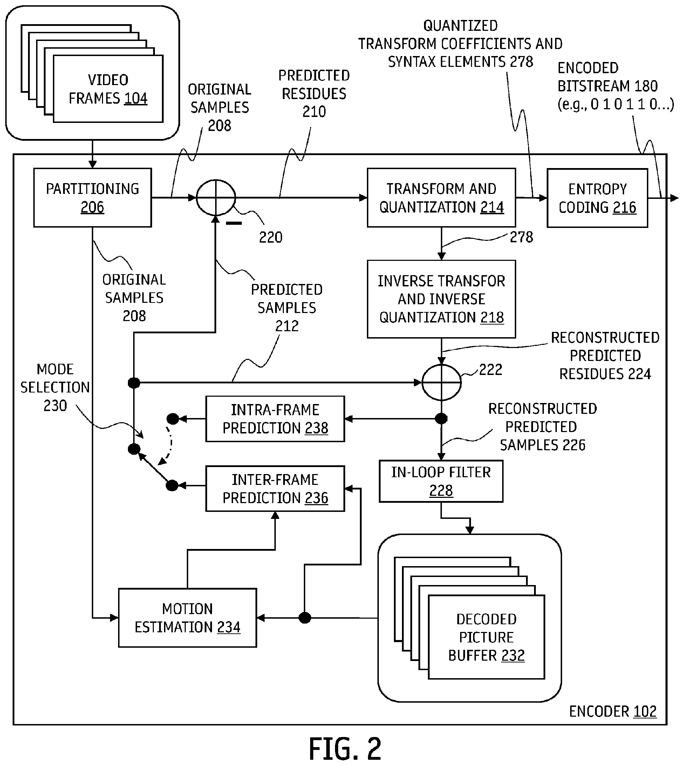

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

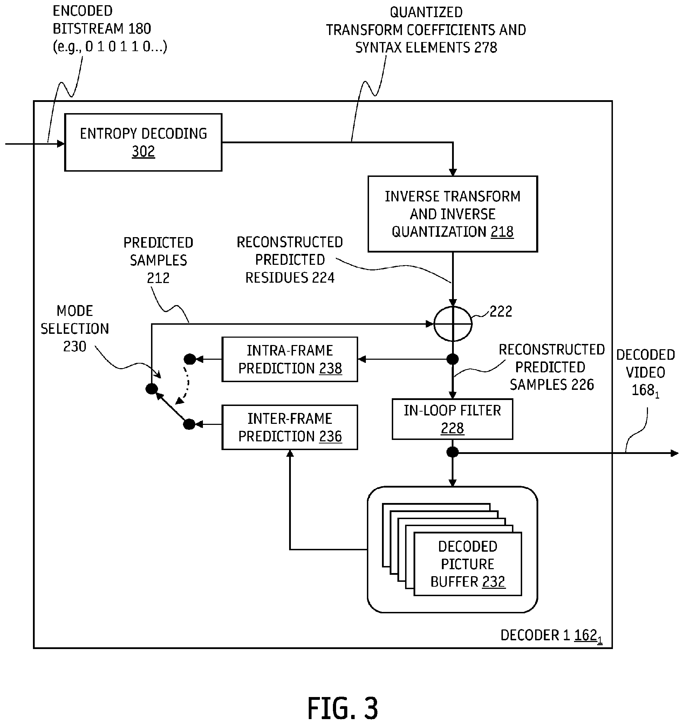

D number of decoding systems 150_{1...D} are illustrated. At least one of the decoding systems 150_{1...D} may be implemented on computing device 900 of FIG. 9. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

### Video encoder

FIG. 2 illustrates encoder 102 to encode video frames and output an encoded bitstream, according to some embodiments of the disclosure. Encoder 102 may include one or more of: signal processing operations and data processing operations, including inter and intra-frame prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-frame prediction 236, intra-frame prediction 238, and entropy coding 216.

Partitioning 206 may divide a frame in video frames 104 into blocks of pixels. Different codecs may allow different variable range of block sizes. In one codec, a frame may be partitioned by partitioning 206 into superblocks of size 128x128 or 64x64 pixels. Partitioning 206 may further divide each superblock using a multi-way partition tree structure. In some cases, a partition of a superblock can be recursively divided further by partitioning 206 using the multi-way partition tree structure (e.g., down to 4x4 size blocks). Partitioning 206 may output original samples 208, e.g., as blocks of pixels.

Intra-frame prediction 238 may predict samples of a block from reconstructed predicted samples of previously encoded spatial neighboring blocks of the same frame. Intra-frame prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-frame prediction 238 may determine a suitable predictor for predicting the samples from reconstructed predicted samples of previously encoded spatial neighboring blocks of the same frame. Intra-frame prediction 238 may generate predicted samples 212 generated using the suitable predictor. Intra-frame prediction 238 may output or identify the neighboring block and a predictor used in generating the predicted samples 212. The identified neighboring block and predictor may be encoded in the encoded bitstream 180 to enable a decoder to reconstruct a block using the same neighboring block and predictor.

Motion estimation 234 and inter-frame prediction 236 may predict samples of a block from samples of previously encoded frames, e.g., reference frames in decoded picture buffer 232. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. Motion predictors may include motion vectors that capture the movement of blocks between frames in a video. Motion estimation 234 may output or identify one or more reference frames and one or more suitable motion predictors. Inter-frame prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s).

Mode selection 230 may be informed by components such as motion estimation 234 to determine whether inter-frame prediction 236 or intra-frame prediction 238 may be more efficient for encoding a block.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-frame prediction 238 and inter-frame prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse Discrete Cosine Transform (DCT), inverse Discrete Wavelet Transform (DWT), etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-frame prediction 236, and intra-frame prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of filters may include constrained low-pass filter, directional deringing filter, edge-directed conditional replacement filter, loop restoration filter, Wiener filter, self-guided restoration filters, constrained directional enhancement filter, luma mapping with chroma scaling, sample adaptive offset filter, adaptive loop filter, cross-component adaptive loop filter, etc.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180.

The encoding process performed by encoder 102 can involve one or more encoding parameters (e.g., options or variables), or a set of encoding parameters, which can be set to change the encoding process. Varying or using different encoding parameters can impact the rate (e.g., bitrate) and distortion (e.g., quality loss) of a resulting encoded bitstream (e.g., encoded bitstream 180). Examples of encoding parameters can include QPs used in transform and quantization 214, motion estimation setting used in motion estimation 234 and/or inter-frame prediction 236 (e.g., search range, available block sizes, whether sub-pixel precision is allowed, etc.), encoding modes impacting mode selection 230, rate control strategies, transform sizes and types used in in transform and quantization 214, in-loop filtering options in in-loop filter 228, frame-type decision making impacting mode selection 230, group of pictures structure impacting mode selection 230, etc.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, inter and intra-frame prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, inter-frame prediction 236, and intra-frame prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180. Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Depending on the prediction modes signaled in the encoded bitstream 180 (e.g., as syntax elements in quantized transform coefficients and syntax elements 278), intra-frame prediction 238 or inter-frame prediction 236 may be applied to generate predicted samples 212. In-loop filter 228 may receive reconstructed predicted samples and output decoded video 168₁.

### Two-stage shot-based encoding

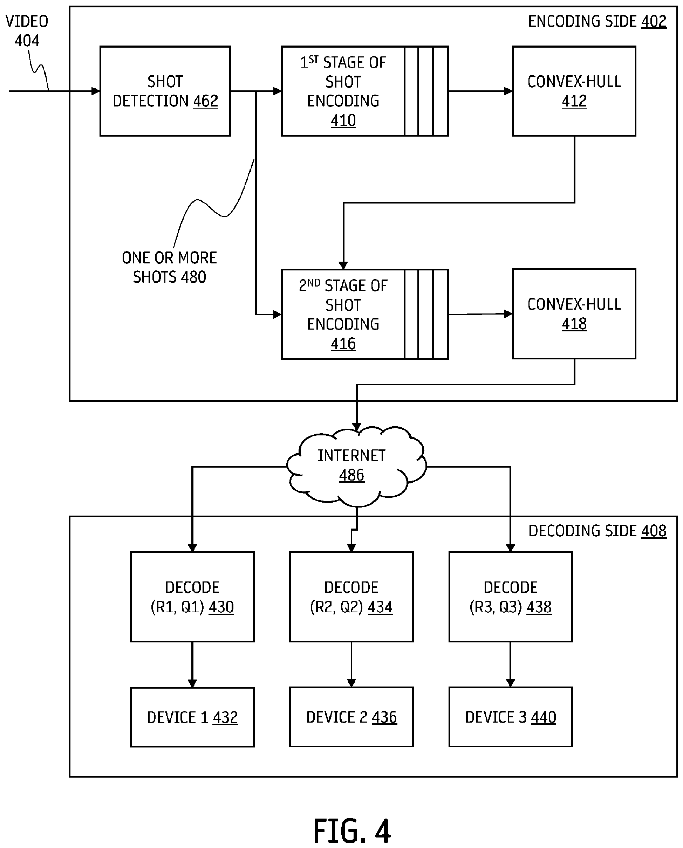

FIG. 4 illustrates an example of a shot-based encoding pipeline, according to some embodiments of the disclosure. The shot-based encoding pipeline incorporates a multi-stage or multi-pass encoding technique to determine optimal encoding parameters. For illustration, two stages or two passes are depicted.

Video 404, which includes a sequence of uncompressed video frames, may be provided as input to encoding side 402. Encoding side 402 may perform encoding operations and generate an encoded bitstream of video 404. Encoding side 402 may transmit encoded bitstream data in a transport format, e.g., in the form of packets, over a network, e.g., Internet 486. Decoding side 408 may receive the packets and perform decoding operations and reconstruct the uncompressed video frames of video 404.

Video 404 may have a length or duration of more than a minute. Video 404 may have a length or duration of 2 minutes, representing a video short posted on a social media platform. Video 404 may have a length or duration of 5 minutes, representing a music video on a video streaming platform. Video 404 may have a length or duration of 45 minutes, representing an episode of a television series. Video 404 may have a length or duration of 3 hours, representing a documentary or a movie. Video 404 may have a length or duration of 5 hours, representing screen-content from a web broadcast event.

As depicted in FIG. 4, shot-based encoding may include shot detection 462, which may include the process of identifying the boundaries between shots 480 in video 404. Each shot in one or more shots 480 may be encoded separately (e.g., using different sets of encoding parameters), which may help improve the overall quality of the video while maintaining reasonable size/bitrate. Shots, such as one or more shots 480, may be defined as continuous sequences of video frames that are captured by a single camera without any interruption or change in camera angle. Shots may include portions or segments of video 404 that have uniform spatial-temporal characteristics across the duration of a particular shot or the video frames of the particular shot. Shots may include different scenes of video 404 separated by scene changes. Shots may include portions or segments of video 404 that have uniform motion patterns across the duration of a shot or the video frames of the shot.

In some embodiments, shot detection 462 may implement one or more of: a digital signal processing algorithm, a computer vision algorithm, a machine learning model, and a deep learning model. Shot detection 462 may process video 404 and output one or more shots 480 of the video 404. A video may include many shots having respective subsets or sequences of uncompressed video frames. Preferably, shot detection 462 may identify one or more points where spatial-temporal characteristics of the video change substantially. Shot detection 462 may analyze content and/or signals in the uncompressed video frames to identify the one or more points in video 404. The one or more points may be considered a camera break or video edit. A camera break may include a cut. A camera break may include a gradual transition (e.g., wipe and dissolve). Shot detection 462 may detect one or more points in video 404 where there is a significant change in visual content, such as one or more changes in camera angle, lighting, and/or motion. Shot detection 462 may perform pixel-based comparisons between adjacent uncompressed frames to detect a significant change. Shot detection 462 may perform color-based comparisons between adjacent uncompressed frames to detect a significant change. Shot detection 462 may extract and compare feature embeddings using a machine learning model (e.g., a deep learning model) for adjacent uncompressed frames to detect a significant change. Shot detection 462 may perform feature-based comparisons (e.g., edges, background, detected object, etc.) between adjacent uncompressed frames to detect a significant change. Shot detection 462 may perform texture-based comparisons (e.g., edges, background, detected object, etc.) between adjacent uncompressed frames to detect a significant change. Shot detection 462 may use the one or more points to separate or segment video 404 into one or more shots 480.

Shot detection 462 may process extract statistics or characteristics of video frames in video 404. The characteristics may include spatial and/or temporal characteristics of the video frames. Examples of characteristics may include color histograms, pixel intensity maps, motion activity maps, number of skip blocks, number of intra-blocks, number of inter-blocks, horizontal motion map, vertical motion map, motion magnitude map, edge maps, DCT coefficients, etc. Characteristics may include characteristics derived from other extracted characteristics.

Shot detection 462 may produce overall shot information for one or more shots 480. Overall shot information can include a starting frame number of a starting video frame of a shot and an ending frame number of an ending video frame of the shot. Overall shot information may include a number of video frames in the shot. Overall shot information may include averages (means), modes, medians of characteristics of the video frames in the shot. Overall shot information may include minimums and maximums of characteristics of the video frames in the shot. Overall shot information may include percentile information of characteristics of the video frames in the shot. Overall shot information may include standard deviation and/or variance information of characteristics of the video frames in the shot.

Shot-based encoding may include applying different encoding techniques and/or sets of encoding parameters to different shots. In some cases, shot-based encoding may, for a given shot, apply one or more stages of encoding, e.g., 1^{st} stage of shot encoding 410 and 2^{nd} stage of shot encoding 416. The stages (sometimes referred to as passes) of encoding may serve as multiple passes of encoding, with a first-stage encoder to gather some information about the best way to encode the shot and a second-stage encoder to use the information to encode the shot more efficiently and optimally.

Once video 404 is divided or segmented into one or more shots 480, a shot in one or more shots 480 can be encoded in a 1^{st} stage of shot encoding 410 using one or more sets of encoding parameters. 1^{st} stage of shot encoding 410 may use, e.g., a very fast preset, a fast encoder, or even a hardware encoder for faster processing. 1^{st} stage of shot encoding 410 may be a coarse, crude, light, or first-pass encoder.

1^{st} stage of shot encoding 410 may implement operations illustrated in encoder 102 of FIG. 1 using one or more first sets of encoding parameters to encode a shot and produce one or more encoded bitstreams.

A set of encoding parameters may include a specific QP. QP controls the amount of compression applied to the video data during the encoding process. A higher QP value can lead to more compression and smaller file size, but also lower quality. On the other hand, a lower QP value can lead to less compression, larger file size, but higher quality. A set of encoding parameters may include a resolution. Higher resolution can lead to larger file size and higher quality. Lower resolution can lead to smaller file size and potentially lower quality. A set of encoding parameters may include other encoding parameters described with FIG. 2.

To select one or more optimal encoding parameters for encoding a shot in one or more shots 480, an approach involving Convex-Hull approach can be used. The Convex-Hull approach may be implemented in Convex-Hull 412. 1^{st} stage of shot encoding 410 may produce multiple encoded bitstreams of the shot which were encoded using different sets of encoding parameters. The encoded bitstreams may each have a measured bitrate and a measured distortion. Measured bitrate represents the number of bits to encode the shot, or the number of bits of an encoded bitstream. Measured distortion represents the quality of the encoded bitstream, or the difference between the decoded shot produced from the encoded bitstream and the original shot. The distortion can be measured using one or more quality metrics such as objective quality metrics and subjective/visual quality metrics. The encoded bitstreams generated using different sets of encoding parameters having respective measured bitrates and measured distortion can form pairs of Rate-Distortion (R-D) points that can be plotted on a graph. Rate and distortion represent a tradeoff that is often made in an encoding process. Convex-Hull approach includes determining an outer envelope that encloses the R-D points. The outer envelope represents a smallest convex set that includes all the points. The points on the Convex-Hull can represent Pareto-optimal solutions, e.g., optimal encoding parameters for a given bitrate, and optimal encoding parameters for a given distortion. For a target bitrate, the Convex-Hull can be used to determine the optimal encoding parameters that can achieve the target bitrate and have the lowest amount of distortion. For a target distortion, the Convex-Hull can be used to determine the optimal encoding parameters that can achieve the target distortion and have the lowest bitrate.

Convex-Hull 412 may select one or more first optimal sets of encoding parameters for encoding each shot in one or more shots 480. The one or more first optimal sets of encoding parameters may be used to encode a particular shot in one or more shots 480 of video 404 in the next stage (e.g., in the 2^{nd} stage of shot encoding 416).

Other suitable optimization approaches may be used to determine the optimal encoding parameters besides the Convex-Hull approach.

In the 2^{nd} stage of shot encoding 416, the shot of video 404 may be encoded (e.g., for a second time) using one or more first optimal sets of encoding parameters determined by Convex-Hull 412. The 2^{nd} stage of shot encoding 416 may use a more sophisticated (slower) encoder than 1^{st} stage shot encoding 410 to achieve the highest possible quality. 2^{nd} stage of shot encoding 416 may be a fine, thorough, heavy-weight, or second-pass encoder.

2^{nd} stage of shot encoding 416 may implement operations illustrated in encoder 102 of FIG. 1 using one or more first sets of encoding parameters to encode the shot and produce one or more encoded bitstreams.

The Convex-Hull approach can be used again in Convex-Hull 418 to determine one or more second optimal sets of encoding parameters for encoding the particular shot in one or more shots 480 of video 404 based on the encoded bitstreams produced by 2^{nd} stage of shot encoding 416. The Convex-Hull approach can ensure that the encoded video maintains a high level of quality while minimizing the file size. Convex-Hull 418 may be used to determine which one or more encoded bitstreams produced by 2^{nd} stage of shot encoding 416 are optimal for a target bitrate. Convex-Hull 418 may be used to determine which one or more encoded bitstreams produced by 2^{nd} stage of shot encoding 416 are optimal for a target distortion. Convex-Hull 418 may be used to determine which one or more encoded bitstreams produced by 2^{nd} stage of shot encoding 416 are optimal for a target resolution.

The particular shot in one or more shots 480 of video 404 may be encoded in encoding side 402 using the one or more second optimal sets of encoding parameters determined in Convex-Hull 418 to obtain one or more encoded bitstreams that may be delivered to end users.

To support ABR streaming, encoding side 402 may apply the multi-stage or multi-pass encoding and shot-based encoding techniques to produce encoded bitstreams at different bitrates and resolutions. The encoded bitstreams at different bitrates and resolutions can form a bitrate ladder. The bitrate ladder can make the particular shot in one or more shots 480 of video 404 available over a range of bandwidth/data rates and resolutions for display on a variety of devices with different connection speeds (e.g., device 1432, device 2 436, and device 3 440).

One or more encoded bitstreams produced by encoding side 402 may be sent, e.g., over Internet 486, to be displayed to one or more users using one or more devices, e.g., device 1432, device 2 436, device 3 440, etc. One or more users can refer to the intended audience for the encoded video stream. Depending on the use case, the user could be anyone who needs to view the video content, such as a viewer watching a streaming service on their laptop, tablet, or smartphone. To optimize the viewing experience for each device, the bitstream quality (e.g., bitrate and/or resolution) may be adjusted or selected statically and/or dynamically based on the capabilities of the device. For example, a laptop with a larger display and higher processing power may be capable of displaying higher quality video (higher bitrate) with a higher resolution. On the other hand, a smartphone with a smaller screen and lower processing power may only be capable of displaying lower quality video (lower bitrate) with a lower resolution.

The one or more encoded bitstreams may be decoded using a corresponding decoder, e.g., decode (R1, Q1) 430, decode (R2, Q2) 434, decode (R3, Q3) 438, etc. A decoder may select an encoded bitstream having a particular resolution and/or bitrate (e.g., (R1, Q1), (R2, Q2), (R3, Q3), etc.) of the bitrate ladder. R1, R2, and R3 may correspond to a first resolution, a second resolution, and a third resolution, respectively. Q1, Q2, and Q3 may correspond to a first bitrate, a second bitrate, and a third bitrate. The particular bitrate and/or resolution may be most suited for the device's display resolution and (current) connection speed. The decoder may implement operations illustrated in decoder 1 162₁ in FIG. 3.

To adjust the bitstream quality for different devices, one or more encoded bitstreams may be transmitted or transported, in a transport format, using adaptive streaming protocols such as Hypertext Transfer Protocol (HTTP) Live Streaming (HLS) or Dynamic Adaptive Streaming over HTTP (DASH), e.g., over Internet 486. These protocols may allow the video to be delivered in small chunks or segments of varying quality, allowing the device to select the appropriate quality level based on its capabilities and network conditions. For example, one or more encoded bitstreams may have multiple versions, each with different bitrates and resolutions. When a user, who is using a device, requests to view the video on their device, the device's client software selects the appropriate version of the one or more encoded bitstreams based on the available network bandwidth and the device's capabilities. The process can ensure that the video is displayed at the highest quality possible while avoiding buffering or other playback issues.

### Efficient shot-based encoding pipeline with selective frames processing

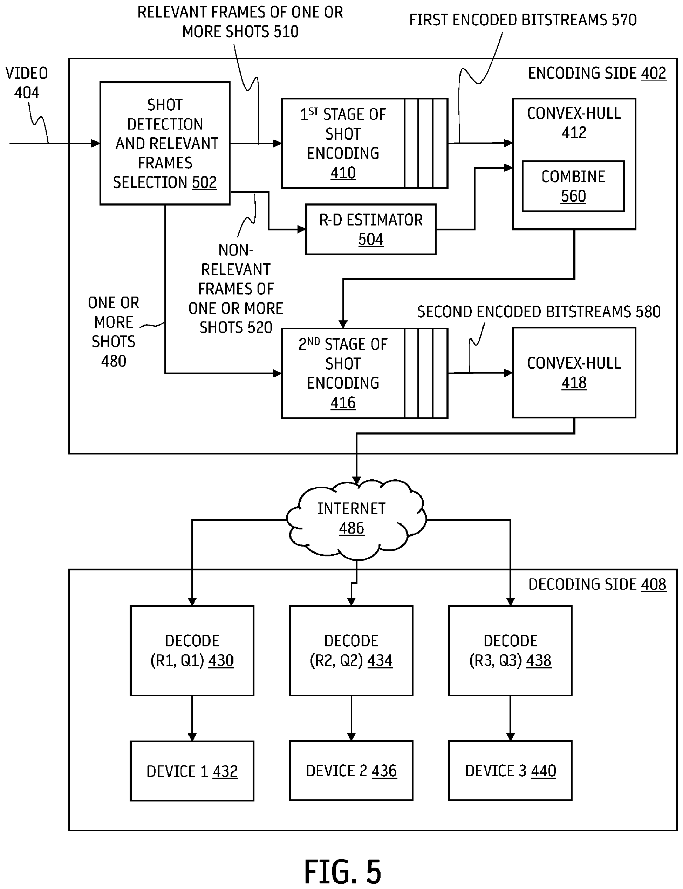

FIG. 5 illustrates an example of shot-based encoding pipeline with selective frames processing, according to some embodiments of the disclosure. The shot-based encoding pipeline illustrated in FIG. 5 includes one or more modifications of the shot-based encoding pipeline illustrated in FIG. 4 to improve runtime and efficiency of the encoding process.

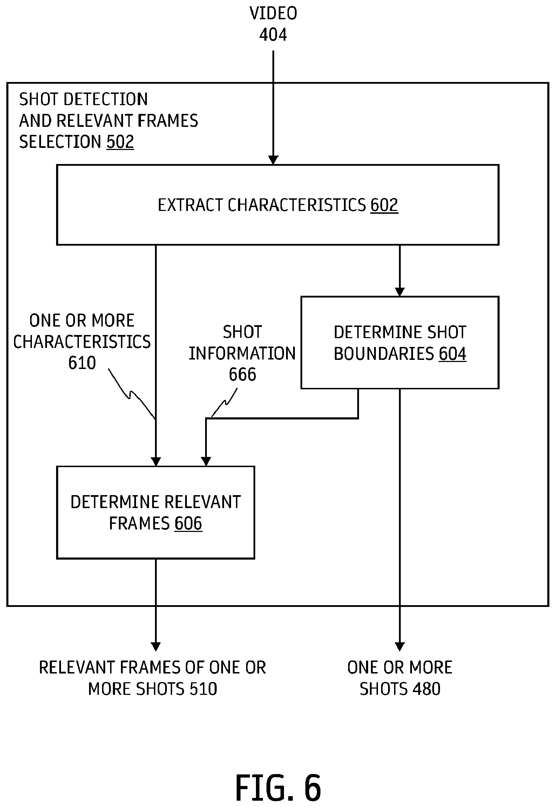

According to one aspect, shot detection incorporates relevant frames selection. Shot detection 462 of FIG. 4 is replaced by shot detection and relevant frames selection 502. Implementation details are described with FIGS. 6-7. Shot detection and relevant frames selection 502 can produce one or more shots 480 and relevant frames of one or more shots 510.

Video 404 may include a first shot and a second shot. Shot detection and relevant frames selection 502 may determine that first video frames belong to a first shot, and second video frames belong to a second shot. Shot detection and relevant frames selection 502 may determine that a first subset of video frames are the first relevant frames of the first shot. Shot detection and relevant frames selection 502 may determine that a second subset of video frames are the second relevant frames of the second shot.

Rather than processing all video frames of a shot in one or more shots 480, 1^{st} stage of shot encoding 410 processes (only) the relevant frames of the one or more shots 510. In particular, a subset (less than all, a selection, a subsample) of video frames of a particular shot is determined to be the relevant frames of the particular shot.

A first subset of the first video frames of the first shot is input into 1^{st} stage of shot encoding 410 (e.g., a first-pass encoder) to produce one or more first encoded bitstreams 570. Convex-Hull 412 may determine one or more first (optimal) encoding parameters based on the one or more first encoded bitstreams 570.

As discussed with FIG. 4, Convex-Hull 412 may determine a Convex-Hull of R-D points representing different encoded bitstreams produced using different sets of encoding parameters. In some embodiments, the R-D points may be based on one or more first encoded bitstreams 570, e.g., the measured bitrates and the measured distortions of one or more first encoded bitstreams 570.

Because one or more first encoded bitstreams 570 are generated using a first subset of the first video frames of the first shot, it is possible that the measured bitrates and the measured distortions may not fully represent the bitrate and distortion of the first shot. To address this concern, encoding side 402 may include R-D estimator 504. R-D estimator 504 may receive the remaining subset of video frames of a particular shot (shown as non-relevant frames of one or more shots 520) and produce one or more of an estimated bitrate and an estimated distortion corresponding to the remaining subset of video frames. Convex-Hull 412 may further determine the one or more first (optimal) encoding parameters further based on one or more of the estimated bitrate and the estimated distortion corresponding to the remaining subset of video frames.

Convex-Hull 412 may determine one or more measured bitrates and one or more measured distortions of the one or more first encoded bitstreams 570. Convex-Hull 412 can include combine 560 to form one or more final R-D points to be used in Convex-Hull 412. Convex-Hull 412 may determine one or more combined bitrate and one or more combined distortions associated with the one or more first encoded bitstreams 570 based on one or more of the estimated bitrate, the estimated distortion, the one or more measured bitrates, and the one or more measured distortions. Combine 560 can may combine (e.g., add) a measured bitrate and an estimated bitrate to produce a combined bitrate. Combine 560 can combine (e.g., add) a measured distortion and an estimated distortion to produce a combined distortion. Convex-Hull 412 may determine the one or more first (optimal) encoding parameters based on a Convex-Hull of the one or more combined bitrates and one or more combined distortions associated with the one or more first encoded bitstreams 570.

In some embodiments, R-D estimator 504 may use a fixed estimated rate and/or a fixed estimated distortion may be used per non-relevant frame, and the fixed estimated rate and/or fixed estimation distortion can be multiplied by the number of non-relevant frames and added to (by combine 560) the measured rates and/or measured distortions of the first encoded bitstreams 570 generated by 1^{st} stage of shot encoding 410. In some embodiments, the estimated rate and/or an estimated distortion for a non-relevant frame may be determined by encoding one or more sample non-relevant frames and estimating the rate and distortion of a non-relevant frame based on the result of encoding the one or more sample non-relevant frames. The estimated rate and/or estimation distortion can be multiplied by the number of non-relevant frames and added to (by combine 560) the measured rates and/or measured distortions of the first encoded bitstreams 570 generated by the 1^{st} stage of shot encoding 410.

The (full set of) first video frames of the first shot are input into 2^{nd} stage of shot encoding 416 (e.g., a second-pass encoder) to produce one or more second encoded bitstreams 580. Convex-Hull 418 may determine one or more second (optimal) encoding parameters based on the one or more second encoded bitstreams 580.

The encoding process involving selective frame processing can be applied to the second shot. A second subset of the second video frames of the second shot is input into 1^{st} stage of shot encoding 410 (e.g., a first-pass encoder) to produce one or more third encoded bitstreams. R-D estimator 504 can be applied to a remaining subset of the second video frames (e.g., non-relevant frames of one or more shots 520). Combine 560 can combine estimated rate and/or estimate distortion with the measured rates and/or measured distortions. Convex-Hull 412 may determine one or more third (optimal) encoding parameters based on the one or more third encoded bitstreams. The (full set of) second video frames of the second shot are input into 2^{nd} stage of shot encoding 416 (e.g., a second-pass encoder) to produce one or more fourth encoded bitstreams. Convex-Hull 418 may determine one or more second (optimal) encoding parameters based on the one or more fourth encoded bitstreams.

Because the number of frames being processed by 1^{st} stage of shot encoding 410 has been significantly reduced, the processing time of encoding side 402 can be drastically reduced. Storage requirements associated with 1^{st} stage of shot encoding 410 can also be drastically reduced.

In some scenarios, 1^{st} stage of shot encoding 410 may take advantage of the reduced number of frames that 1^{st} stage of shot encoding 410 needs to process and increase the number of encoded bitstreams that 1^{st} stage of shot encoding 410 produces (testing out more sets of encoding parameters) to allow Convex-Hull 412 to obtain more R-D points.

### Relevant frames selection and determination

FIG. 6 illustrates an example of shot detection with relevant frames selection, according to some embodiments of the disclosure. Shot detection and relevant frames selection 502 may include extract characteristics 602, determine shot boundaries 604, and determine relevant frames 606. Shot detection and relevant frames selection 502 may receive video 404. Shot detection and relevant frames selection 502 may output one or more shots 480, e.g., a first shot of video 404 having first video frames, a second shot of video 404 having second video frames. Shot detection and relevant frames selection 502 may output relevant frames of one or more shots 510, e.g., relevant frames of a first shot, relevant frames of a second shot.

Extract characteristics 602 may extract characteristics for video frames of video 404 to be encoded by an encoding process. Examples of characteristics are described with shot detection 462 of FIG. 4. One or more characteristics 610 extracted by extract characteristics 602 can be provided to determine relevant frames 606.

Determine shot boundaries 604 may determine, based on the characteristics, that first video frames of video 404 belong to a first shot. Determine shot boundaries 604 may determine, based on the characteristics, that second video frames of the video belong to a second shot. Determine shot boundaries 604 may determine shot information 666 associated with the first shot and the second shot. Examples of (overall) shot information 666 are described with shot detection 462 of FIG. 4. Shot information 666 may be provided to determine relevant frames 606.

Determine relevant frames 606 may determine that a first subset of the first video frames is relevant to the encoding process based on one or more first characteristics associated with the first subset of the first video frames. Determine relevant frames 606 may determine that the first subset of the first video frames is relevant to the encoding process further based on the shot information 666. The first subset of the first video frames may be the relevant frames of the first shot. Determine relevant frames 606 may determine that a second subset of the second video frames is relevant to the encoding process based on one or more second characteristics associated with the second subset of the second video frames. Determine relevant frames 606 may determine that the second subset of the second video frames is relevant to the encoding process further based on the shot information 666. The second subset of the second video frames may be the relevant frames of the second shot.

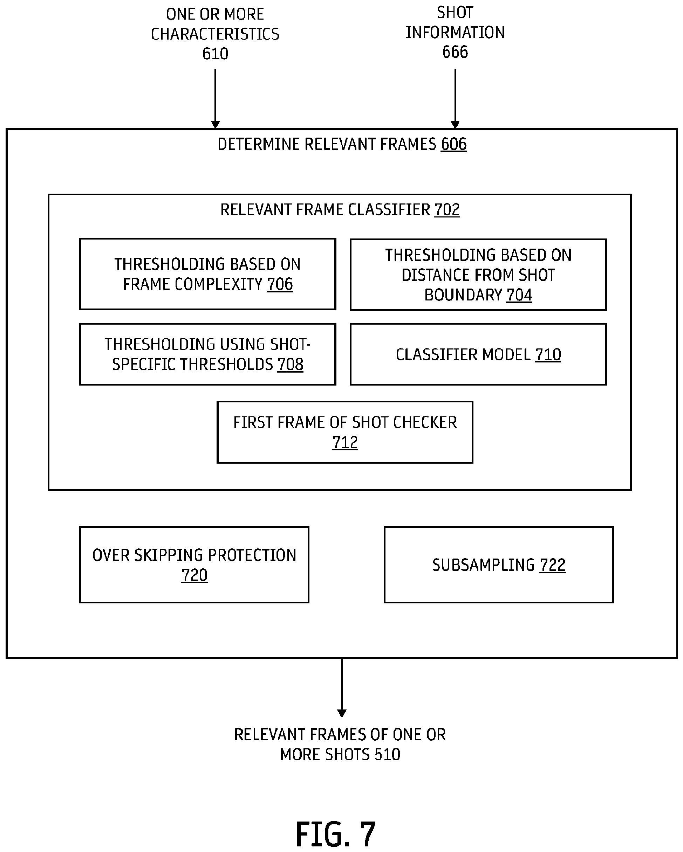

Determine relevant frames 606 is preferably a lightweight process that takes advantage of the one or more characteristics 610 and shot information 666 already produced by extract characteristics 602 and determine shot boundaries 604 to determine which video frames are relevant to the encoding process. One or more characteristics 610 can offer information relating to encoding complexity and provides insight into which video frames will make a significant contribution to the R-D values of an encoded bitstream. Shot information 666 may also offer heuristics that can help in determining which video frames are relevant to the encoding process, e.g., based on a video frame's position within the shot or distance from the shot boundaries. Shot information 666 may also offer overall information about the shot that can inform thresholds used for determining relevant frames. Determine relevant frames 606 is described in further detail in FIG. 7.

FIG. 7 illustrates determining relevant frames, e.g., by determine relevant frames 606, according to some embodiments of the disclosure. Determine relevant frames 606 may include one or more of: relevant frame classifier 702, over skipping protection 720, and subsampling 722.

Relevant frame classifier 702 may implement a classifying function to determine whether a video frame of a shot is relevant to the encoding process of the video frame. The classifying function may take one or more characteristics 610 and/or shot information 666 as input and determine whether a particular video frame is relevant or not. A video frame that is considered relevant may be added to a relevant frames buffer. After all video frames have been processed by determine relevant frames 606, the relevant frames in the relevant frames buffer can be output as relevant frames of one or more shots 510.

Relevant frame classifier 702 may include first frame of shot checker 712. First frame of shot checker 712 may determine that a starting video frame of a shot is always relevant. The starting video frame may be specified in shot information 666. Determining that the first subset of the first video frames is relevant to the encoding process can include determining that a starting video frame of the first shot is relevant to the encoding process. Determining that the first subset of the first video frames is relevant to the encoding process can include determining that a starting video frame of the second shot is relevant to the encoding process. First frame of shot checker 712 may check whether a video frame is a starting video frame of a shot. First frame of shot checker 712 may perform the check based on shot information 666.

Relevant frame classifier 702 may include thresholding based on frame complexity 706. Frame complexity can have a direct impact on the R-D pair of an encoded bitstream. Higher frame complexity generally would result in a higher bitrate and may be particularly relevant to the encoding process. Frame complexity 706 may apply one or more complexity thresholds on one or more characteristics 610 that are associated with complexity, such as spatial and temporal complexity. Determining that the first subset of the first video frames is relevant to the encoding process can include determining that one or more characteristics 610 associated with the first subset of the first video frames crosses a complexity threshold. Determining that the second subset of the second video frames is relevant to the encoding process can include determining that one or more characteristics 610 associated with the second subset of the second video frames crosses a complexity threshold.

Relevant frame classifier 702 may include thresholding based on distance from shot boundary 704. Frames near a shot boundary, e.g., frames near the start of a shot, defines the shot and can be particularly relevant to the encoding process. The frames near a shot boundary may be more salient than other frames farther away from a shot boundary. Frames near the start of a shot may lack of past reference data and can require a high number of bits to encode, meaning that the frames may have a significant contribution to the R-D pair of an encoded bitstream. The complexity threshold used in comparing the one or more characteristics 610 can be varied based on a video frame's distance from a shot boundary. In some embodiments, thresholding based on distance from shot boundary 704 may set the complexity threshold used in comparing the one or more characteristics 610 of a particular video frame based on a distance of the particular video frame from a shot boundary that bounds the first shot. In some embodiments, thresholding based on distance from shot boundary 704 may set the complexity threshold used in comparing the one or more characteristics 610 of a particular video frame based on a distance of the particular video frame from a shot boundary that bounds the second shot. In one example, a complexity threshold may be set higher when a particular video frame is farther away from a shot boundary, making it harder for the particular video frame farther away from a shot boundary to qualify as a relevant frame.

Relevant frame classifier 702 may include thresholding using shot specific thresholds 708. The one or more characteristics 610 of first video frames of the first shot and the one or more characteristics 610 of the second video frames of the second shot can be different from each other (hence the video has been separated into separate shots). For this reason, the complexity threshold may benefit from being dependent on the characteristics of a given shot indicated in shot information 666. The complexity threshold can be set considering overall shot information 666, such as mean, mode, median, minimum, and maximum of characteristics across the video frames of the shot. In some embodiments, the complexity threshold can be set based on a point within a range defined by the minimum and maximum. In some embodiments, the complexity threshold can be set using a percentile-based threshold. Percentile-based thresholds can ensure a certain (minimum) number of video frames in a shot are considered relevant. In some embodiments, the complexity threshold can be set based on standard deviation. Determining that the first subset of the first video frames is relevant to the encoding process can include setting the complexity threshold used in comparing the one or more characteristics 610 of a particular video frame based on the characteristics associated with the first video frames of the first shot, e.g., data included in shot information 666. Determining that the second subset of the first video frames is relevant to the encoding process can include setting the complexity threshold used in comparing the one or more characteristics 610 of a particular video frame based on the characteristics associated with the second video frames of the second shot, e.g., data included in shot information 666.

Relevant frame classifier 702 may include classifier model 710. Classifier model 710 may include a machine learning model. Examples of machine learning models may include a neural network, a decision tree, a support vector machine, etc. Classifier model 710 may be trained using training data produced based on shots and optimally encoded shots. One or more characteristics and shot information can be extracted from the shots and used as ground truth input data. Ground truth labels or output data can be produced based on a particular frame's contribution to the final R-D pair of the encoded bitstream. If the particular video frame's contribution is high (e.g., above 1% of the overall bitrate of the encoded bitstream or above a predetermined threshold), then the ground truth label may include a relevant frame label. If the particular video frame's contribution is low (e.g., below 1% of the overall bitrate of the encoded bitstream or below a predetermined threshold), then the ground truth label may include a non-relevant frame label. Classifier model 710 may receive the one or more characteristics 610 and/or shot information 666 as input and output a classification indicating whether a particular frame is a relevant frame or a non-relevant frame. Determining that the first subset of the first video frames is relevant to the encoding process comprises inputting the one or more first characteristics associated with the first subset of first video frames into classifier model 710. Determining that the first subset of the first video frames is relevant to the encoding process comprises inputting the one or more second characteristics associated with the second subset of second video frames into classifier model 710.

In some embodiments, classifier model 710 may include a machine learning model to process sequential data comprising one or more characteristics 610 and/or shot information 666 of video frames of a shot arranged as sequentially based on the frame position of the video frames. The machine learning model may output sequential predictions comprising relevant frame classification for each video frame of the shot. Examples of the machine learning models may include recurrent neural networks, long short-term memory model, transformer-based neural networks, temporal convolutional neural networks, hidden Markov models, sequence-to-sequence models, etc.

Determine relevant frames 606 may include over skipping protection 720. When using a complexity threshold, it is possible that too few video frames of a shot are classified to be a relevant frame. Processing too few relevant frames in the first-pass encoder may not result in a sufficiently good R-D pair for the encoded bitstream. To protect against over skipping of video frames, over skipping protection 720 may implement a rule to ensure that a minimum number of video frames are classified as relevant frames for the shot. Determining that the first subset of the first video frames is relevant to the encoding process can include determining that every Nth video frame is relevant to the encoding process. N may be 4 for example. Every 4^{th} video frame of a shot may be classified as a relevant frame regardless of whether one or more characteristics 610 cross a complexity threshold. Every 4^{th} video frame of a shot may be classified as a relevant frame regardless of whether classifier model 710 may classify the video frame as a relevant frame. N can be set based on a total number of the first video frames in the first shot. N can be set based on a total number of the second video frames in the second shot. Over skipping protection 720 may determine that a plurality of video frames at spaced intervals, or regularly spaced intervals (e.g., N video frames apart) in the first video frames are relevant to the encoding process. Video frames at spaced intervals, or regularly spaced intervals, as used herein, refers to video frames at equally spaced timestamps or equally spaced positions in a video. The first subset of the first video frames may include the video frames at the spaced intervals. If the first shot includes 120 frames, N may be set to ensure that at least 25% of 120 frames, or 30 frames will be classified as relevant video frames. In some cases, N may be set based on other minimum number of relevant frames constraint or rule. The constraint or rule may depend on the shot, such as the total number of video frames in a shot, or a user preference/setting. In some cases, if the total number of first video frames of the first shot is relatively higher than the total number of second video frames of the second shot, N may be set higher for the first shot than for the second shot.

Determine relevant frames 606 may include subsampling 722. Video frames of a shot can be subsampled, e.g., every Kth video frame of a shot is considered to be a relevant frame, or video frames at spaced intervals in the shot are considered to be relevant frames. In some cases, video frames of a shot are randomly subsampled according to a probability distribution (e.g., binomial distribution, Bernoulli distribution) and output a random subsample of video frames of a shot to be the subset of video frames which are relevant to the encoding process. Subsampling 722 may follow a constraint or rule to ensure that a minimum number of relevant frames are subsampled or randomly subsampled.

### Exemplary method for two-stage shot-based encoding with selective frames processing

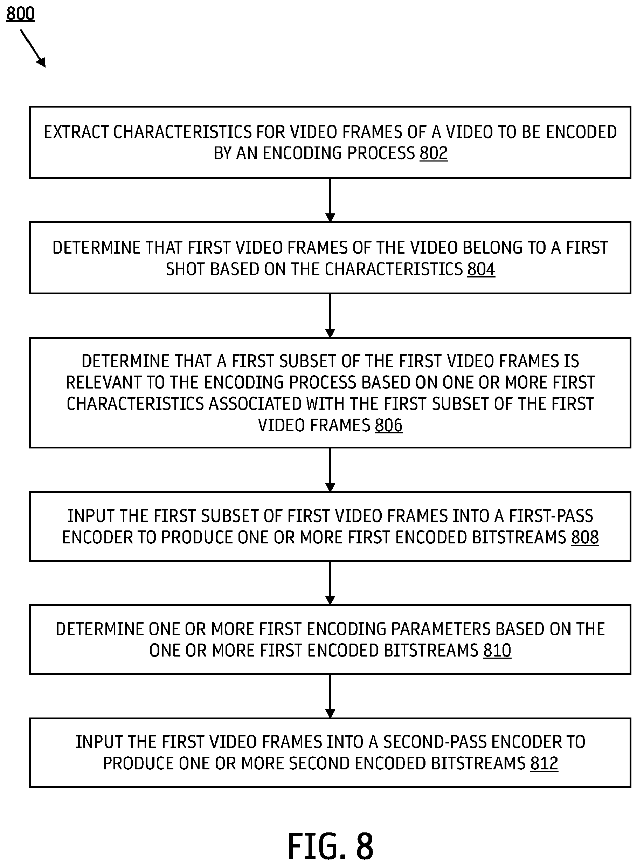

FIG. 8 depicts a flow diagram of exemplary method 800 for two-stage shot-based encoding with selective frames processing, according to some embodiments of the disclosure. Exemplary method 800 may be encoded as instructions and stored in memory 904 of computing device 900 of FIG. 9. Exemplary method 800 may be executed by one or more parts of encoding side 402 of FIG. 5. Exemplary method 800 may be executed by shot detection and relevant frames selection 502 or one or more parts thereof.

In 802, one or more characteristics for video frames of a video to be encoded by an encoding process may be extracted.

In 804, it may be determined, based on the one or more characteristics, that first video frames of the video belong to a first shot.

In 806, a first subset of the first video frames may be determined to be relevant to the encoding process based on one or more first characteristics associated with the first subset of the first video frames.

In 808, the first subset of the first video frames is input into a first-pass encoder to produce one or more first encoded bitstreams.

In 810, one or more first encoding parameters are determined based on the one or more first encoded bitstreams.

In 812, the first video frames are input into a second-pass encoder. The second-pass encoder applies the one or more first encoding parameters to produce one or more second encoded bitstreams.

### Exemplary computing device

FIG. 9 is a block diagram of an apparatus or a system, e.g., an exemplary computing device 900, according to some embodiments of the disclosure. One or more computing devices 900 may be used to implement the functionalities described with the FIGS. and herein. A number of components are illustrated in FIG. 9 can be included in the computing device 900, but any one or more of these components may be omitted or duplicated, as suitable for the application. In some embodiments, some or all of the components included in the computing device 900 may be attached to one or more motherboards. In some embodiments, some or all of these components are fabricated onto a single system on a chip (SoC) die. Additionally, in various embodiments, the computing device 900 may not include one or more of the components illustrated in FIG. 9, and the computing device 900 may include interface circuitry for coupling to the one or more components. For example, the computing device 900 may not include a display device 906, and may include display device interface circuitry (e.g., a connector and driver circuitry) to which a display device 906 may be coupled. In another set of examples, the computing device 900 may not include an audio input device 918 or an audio output device 908 and may include audio input or output device interface circuitry (e.g., connectors and supporting circuitry) to which an audio input device 918 or audio output device 908 may be coupled.

The computing device 900 may include a processing device 902 (e.g., one or more processing devices, one or more of the same type of processing device, one or more of different types of processing device). The processing device 902 may include electronic circuitry that process electronic data from data storage elements (e.g., registers, memory, resistors, capacitors, quantum bit cells) to transform that electronic data into other electronic data that may be stored in registers and/or memory. Examples of processing device 902 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 900 may include a memory 904, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 904 includes one or more non-transitory computer-readable storage media. In some embodiments, memory 904 may include memory that shares a die with the processing device 902. In some embodiments, memory 904 includes one or more non-transitory computer-readable media storing instructions executable to perform operations described herein, such as operations illustrated in FIG. 5-7 and method 800 of FIG. 8. The instructions stored in the one or more non-transitory computer-readable media may be executed by processing device 902.

Memory 904 may include one or more non-transitory computer-readable media storing instructions executable to perform operations associated with encoding side 402. Memory 904 may include one or more non-transitory computer-readable media storing instructions executable to perform operations associated with shot detection and relevant frames selection 502. Memory 904 may include one or more non-transitory computer-readable media storing instructions executable to perform operations associated with R-D estimator 504. Memory 904 may include one or more non-transitory computer-readable media storing instructions executable to perform operations associated with determine relevant frames 606 and one or more parts thereof.

Memory 904 may include one or more non-transitory computer-readable media storing one or more of: input frames to the encoder, intermediate data structures computed by the encoder, bitstream generated by the encoder, bitstream received by a decoder, intermediate data structures computed by the decoder, and reconstructed frames generated by the decoder. In some embodiments, memory 904 may store data, e.g., data structures, binary data, bits, metadata, files, blobs, etc., as described with the FIGS. and herein.

In some embodiments, memory 904 may store one or more machine learning models (or parts thereof). An example of a machine learning model includes classifier model 710. Memory 904 may store training data for training a machine learning model. Memory 904 may store instructions that perform operations associated with training a machine learning model. Memory 904 may store input data, output data, intermediate outputs, intermediate inputs of one or more machine learning models. Memory 904 may store one or more parameters used by the one or more machine learning models. Memory 904 may store information that encodes how nodes or parts of the one or more machine learning models are connected with each other. Memory 904 may store instructions (e.g., low-level machine code) to perform one or more operations of the one or more machine learning models. Memory 904 may store a model definition that specifies one or more operations of a machine learning model.

In some embodiments, the computing device 900 may include a communication device 912 (e.g., one or more communication devices). For example, the communication device 912 may be configured for managing wired and/or wireless communications for the transfer of data to and from the computing device 900. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 912 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 912 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 912 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 912 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 912 may operate in accordance with other wireless protocols in other embodiments. The computing device 900 may include an antenna 922 to facilitate wireless communications and/or to receive other wireless communications (such as radio frequency transmissions). Computing device 900 may include receiver circuits and/or transmitter circuits. In some embodiments, the communication device 912 may manage wired communications, such as electrical, optical, or any other suitable communication protocols (e.g., the Ethernet). As noted above, the communication device 912 may include multiple communication chips. For instance, a first communication device 912 may be dedicated to shorter-range wireless communications such as Wi-Fi or Bluetooth, and a second communication device 912 may be dedicated to longer-range wireless communications such as global positioning system (GPS), EDGE, GPRS, CDMA, WiMAX, LTE, EV-DO, or others. In some embodiments, a first communication device 912 may be dedicated to wireless communications, and a second communication device 912 may be dedicated to wired communications.

The computing device 900 may include power source / power circuitry 914. The power source / power circuitry 914 may include one or more energy storage devices (e.g., batteries or capacitors) and/or circuitry for coupling components of the computing device 900 to an energy source separate from the computing device 900 (e.g., DC power, AC power, etc.).

The computing device 900 may include a display device 906 (or corresponding interface circuitry, as discussed above). The display device 906 may include any visual indicators, such as a heads-up display, a computer monitor, a projector, a touchscreen display, a liquid crystal display (LCD), a light-emitting diode display, or a flat panel display, for example.

The computing device 900 may include an audio output device 908 (or corresponding interface circuitry, as discussed above). The audio output device 908 may include any device that generates an audible indicator, such as speakers, headsets, or earbuds, for example.

The computing device 900 may include an audio input device 918 (or corresponding interface circuitry, as discussed above). The audio input device 918 may include any device that generates a signal representative of a sound, such as microphones, microphone arrays, or digital instruments (e.g., instruments having a musical instrument digital interface (MIDI) output).

The computing device 900 may include a GPS device 916 (or corresponding interface circuitry, as discussed above). The GPS device 916 may be in communication with a satellite-based system and may receive a location of the computing device 900, as known in the art.

The computing device 900 may include a sensor 930 (or one or more sensors). The computing device 900 may include corresponding interface circuitry, as discussed above). Sensor 930 may sense physical phenomenon and translate the physical phenomenon into electrical signals that can be processed by, e.g., processing device 902. Examples of sensor 930 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 900 may include another output device 910 (or corresponding interface circuitry, as discussed above). Examples of the other output device 910 may include an audio codec, a video codec, a printer, a wired or wireless transmitter for providing information to other devices, haptic output device, gas output device, vibrational output device, lighting output device, home automation controller, or an additional storage device.

The computing device 900 may include another input device 920 (or corresponding interface circuitry, as discussed above). Examples of the other input device 920 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 900 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 900 may be any other electronic device that processes data.

### Select examples

Example 1 provides a method, including extracting characteristics for video frames of a video to be encoded by an encoding process; determining, based on the characteristics, that first video frames of the video belong to a first shot; determining that a first subset of the first video frames is relevant to the encoding process based on one or more first characteristics associated with the first subset of the first video frames; inputting the first subset of the first video frames into a first-pass encoder to produce one or more first encoded bitstreams; determining one or more first encoding parameters based on the one or more first encoded bitstreams; and inputting the first video frames into a second-pass encoder applying the one or more first encoding parameters to produce one or more second encoded bitstreams.

Example 2 provides the method of example 1, where determining that the first subset of the first video frames is relevant to the encoding process includes determining that a starting video frame of the first shot is relevant to the encoding process.

Example 3 provides the method of example 1 or 2, where determining that the first subset of the first video frames is relevant to the encoding process includes determining that one or more characteristics associated with the first subset of the first video frames crosses a complexity threshold.

Example 4 provides the method of example 3, where determining that the first subset of the first video frames is relevant to the encoding process includes setting the complexity threshold used in comparing the one or more characteristics of a particular video frame based on a distance of the particular video frame from a shot boundary that bounds the first shot.

Example 5 provides the method of example 3, where determining that the first subset of the first video frames is relevant to the encoding process includes setting the complexity threshold used in comparing the one or more characteristics of a particular video frame based on the characteristics associated with the first video frames of the first shot.

Example 6 provides the method of any one of examples 1-5, where determining that the first subset of the first video frames is relevant to the encoding process includes inputting the one or more first characteristics into a classifier model.

Example 7 provides the method of any one of examples 1-6, where determining that the first subset of the first video frames is relevant to the encoding process includes determining that a plurality of video frames at regularly spaced intervals are relevant to the encoding process.

Example 8 provides the method of any one of examples 1-7, further including determining one or more of an estimated bitrate and an estimated distortion of a remaining subset of the first video frames; where determining the one or more first encoding parameters includes determining the one or more first encoding parameters further based on one or more of the estimated bitrate and the estimated distortion.

Example 9 provides the method of example 8, where determining the one or more first encoding parameters includes determining one or more measured bitrates and one or more measured distortions of the one or more first encoded bitstreams; and determining one or more combined bitrates and one or more combined distortions associated with the one or more first encoded bitstreams based on one or more of the estimated bitrate, the estimated distortion, the one or more measured bitrates, and the one or more measured distortions.

Example 10 provides the method of example 9, where determining the one or more first encoding parameters includes determining the one or more first encoding parameters based on the one or more combined bitrates and the one or more combined distortions associated with the one or more first encoded bitstreams.

Example 11 provides the method of example 9 or 10, where determining the one or more first encoding parameters includes determining the one or more first encoding parameters based on a Convex-Hull of the one or more combined bitrates and the one or more combined distortions associated with the one or more first encoded bitstreams.

Example 12 provides the method of any one of examples 1-11, where the first-pass encoder is faster than the second-pass encoder.

Example 13 provides the method of any one of examples 1-12, further including determining, based on the characteristics, that second video frames of the video belong to a second shot; determining that a second subset of the second video frames is relevant to the encoding process based on one or more second characteristics associated with the second subset of the second video frames; inputting the second subset of the second video frames into the first-pass encoder to produce one or more third encoded bitstreams; determining one or more second encoding parameters based on the one or more third encoded bitstreams; and inputting the second video frames into the second-pass encoder applying the one or more second encoding parameters to produce one or more fourth encoded bitstreams.

Example 14 provides one or more non-transitory computer-readable media storing instructions that, when executed by one or more processors, cause the one or more processors to: extract characteristics for video frames of a video to be encoded by an encoding process; determine, based on the characteristics, that first video frames of the video belong to a first shot; determine that a first subset of the first video frames is relevant to the encoding process based on one or more first characteristics associated with the first subset of the first video frames; input the first subset of the first video frames into a first-pass encoder to produce one or more first encoded bitstreams; determine one or more first encoding parameters based on the one or more first encoded bitstreams; and input the first video frames into a second-pass encoder applying the one or more first encoding parameters to produce one or more second encoded bitstreams.

Example 15 provides the one or more non-transitory computer-readable media of example 14, where determining that the first subset of the first video frames is relevant to the encoding process includes determining that a starting video frame of the first shot is relevant to the encoding process.

Example 16 provides the one or more non-transitory computer-readable media of example 14 or 15, where determining that the first subset of the first video frames is relevant to the encoding process includes determining that one or more characteristics associated with the first subset of the first video frames crosses a complexity threshold.

Example 17 provides the one or more non-transitory computer-readable media of example 16, where determining that the first subset of the first video frames is relevant to the encoding process includes setting the complexity threshold used in comparing the one or more characteristics of a particular video frame based on a distance of the particular video frame from a shot boundary that bounds the first shot.

Example 18 provides the one or more non-transitory computer-readable media of example 16, where determining that the first subset of the first video frames is relevant to the encoding process includes setting the complexity threshold used in comparing the one or more characteristics of a particular video frame based on the characteristics associated with the first video frames of the first shot.

Example 19 provides the one or more non-transitory computer-readable media of any one of examples 14-18, where determining that the first subset of the first video frames is relevant to the encoding process includes inputting the one or more first characteristics into a classifier model.

Example 20 provides the one or more non-transitory computer-readable media of any one of examples 14-19, where determining that the first subset of the first video frames is relevant to the encoding process includes determining that a plurality of video frames at regularly spaced intervals are relevant to the encoding process.

Example 21 provides the one or more non-transitory computer-readable media of any one of examples 14-20, where the instructions further cause the one or more processors to: determine one or more of an estimated bitrate and an estimated distortion of a remaining subset of the first video frames; where determining the one or more first encoding parameters includes determining the one or more first encoding parameters further based on one or more of the estimated bitrate and the estimated distortion.

Example 22 provides the one or more non-transitory computer-readable media of example 21, where determining the one or more first encoding parameters includes determining one or more measured bitrates and one or more measured distortions of the one or more first encoded bitstreams; and determining one or more combined bitrates and one or more combined distortions associated with the one or more first encoded bitstreams based on one or more of the estimated bitrate, the estimated distortion, the one or more measured bitrates, and the one or more measured distortions.

Example 23 provides the one or more non-transitory computer-readable media of example 22, where determining the one or more first encoding parameters includes determining the one or more first encoding parameters based on the one or more combined bitrates and the one or more combined distortions associated with the one or more first encoded bitstreams.

Example 24 provides the one or more non-transitory computer-readable media of example 22 or 23, where determining the one or more first encoding parameters includes determining the one or more first encoding parameters based on a Convex-Hull of the one or more combined bitrates and the one or more combined distortions associated with the one or more first encoded bitstreams.

Example 25 provides the one or more non-transitory computer-readable media of any one of examples 14-24, where the first-pass encoder is faster than the second-pass encoder.

Example 26 provides the one or more non-transitory computer-readable media of any one of examples 14-25, where the instructions further cause the one or more processors to: determine, based on the characteristics, that second video frames of the video belong to a second shot; determine that a second subset of the second video frames is relevant to the encoding process based on one or more second characteristics associated with the second subset of the second video frames; input the second subset of the second video frames into the first-pass encoder to produce one or more third encoded bitstreams; determine one or more second encoding parameters based on the one or more third encoded bitstreams; and input the second video frames into the second-pass encoder applying the one or more second encoding parameters to produce one or more fourth encoded bitstreams.

Example 27 provides a system, including one or more processors; and one or more non-transitory computer-readable media storing instructions that, when executed by the one or more processors, cause the one or more processors to: extract characteristics for video frames of a video to be encoded by an encoding process; determine, based on the characteristics, that first video frames of the video belong to a first shot; determine that a first subset of the first video frames is relevant to the encoding process based on one or more first characteristics associated with the first subset of the first video frames; input the first subset of the first video frames into a first-pass encoder to produce one or more first encoded bitstreams; determine one or more first encoding parameters based on the one or more first encoded bitstreams; and input the first video frames into a second-pass encoder applying the one or more first encoding parameters to produce one or more second encoded bitstreams.

Example 28 provides the system of example 27, where determining that the first subset of the first video frames is relevant to the encoding process includes determining that a starting video frame of the first shot is relevant to the encoding process.

Example 29 provides the system of example 27 or 28, where determining that the first subset of the first video frames is relevant to the encoding process includes determining that one or more characteristics associated with the first subset of the first video frames crosses a complexity threshold.

Example 30 provides the system of example 29, where determining that the first subset of the first video frames is relevant to the encoding process includes setting the complexity threshold used in comparing the one or more characteristics of a particular video frame based on a distance of the particular video frame from a shot boundary that bounds the first shot.

Example 31 provides the system of example 29, where determining that the first subset of the first video frames is relevant to the encoding process includes setting the complexity threshold used in comparing the one or more characteristics of a particular video frame based on the characteristics associated with the first video frames of the first shot.

Example 32 provides the system of any one of examples 27-31, where determining that the first subset of the first video frames is relevant to the encoding process includes inputting the one or more first characteristics into a classifier model.

Example 33 provides the system of any one of examples 27-32, where determining that the first subset of the first video frames is relevant to the encoding process includes determining that a plurality of video frames at regularly spaced intervals are relevant to the encoding process.

Example 34 provides the system of any one of examples 27-33, where the instructions further cause the one or more processors to: determine one or more of an estimated bitrate and an estimated distortion of a remaining subset of the first video frames; where determining the one or more first encoding parameters includes determining the one or more first encoding parameters further based on one or more of the estimated bitrate and the estimated distortion.

Example 35 provides the system of example 34, where determining the one or more first encoding parameters includes determining one or more measured bitrates and one or more measured distortions of the one or more first encoded bitstreams; and determining one or more combined bitrates and one or more combined distortions associated with the one or more first encoded bitstreams based on one or more of the estimated bitrate, the estimated distortion, the one or more measured bitrates, and the one or more measured distortions.

Example 36 provides the system of example 35, where determining the one or more first encoding parameters includes determining the one or more first encoding parameters based on the one or more combined bitrates and the one or more combined distortions associated with the one or more first encoded bitstreams.

Example 37 provides the system of example 35 or 36, where determining the one or more first encoding parameters includes determining the one or more first encoding parameters based on a Convex-Hull of the one or more combined bitrates and the one or more combined distortions associated with the one or more first encoded bitstreams.

Example 38 provides the system of any one of examples 27-37, where the first-pass encoder is faster than the second-pass encoder.

Example 39 provides the system of any one of examples 27-38, where the instructions further cause the one or more processors to: determine, based on the characteristics, that second video frames of the video belong to a second shot; determine that a second subset of the second video frames is relevant to the encoding process based on one or more second characteristics associated with the second subset of the second video frames; input the second subset of the second video frames into the first-pass encoder to produce one or more third encoded bitstreams; determine one or more second encoding parameters based on the one or more third encoded bitstreams; and input the second video frames into the second-pass encoder applying the one or more second encoding parameters to produce one or more fourth encoded bitstreams.

Example A provides an apparatus comprising means to carry out or means for carrying out any one of the methods provided in examples 1-13 and methods/processes described herein.

Example B provides an encoder system to generate an encoded bitstream comprising encoding side 402 as described herein.

Example C provides an encoder system to perform any one of the methods provided in examples 1-13 and methods/processes described herein.

Example D provides shot detection and relevant frames selection 502 as described herein.

Example E provides relevant frame classifier 702 as described herein.

### Variations and other notes

Although the operations of the example method shown in and described with reference to FIGS. 5-8 are illustrated as occurring once each and in a particular order, it will be recognized that the operations may be performed in any suitable order and repeated as desired. Additionally, one or more operations may be performed in parallel. Furthermore, the operations illustrated in FIGS. 5-8 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
extracting characteristics for video frames of a video to be encoded by an encoding process;
determining, based on the characteristics, that first video frames of the video belong to a first shot;
determining that a first subset of the first video frames is relevant to the encoding process based on one or more first characteristics associated with the first subset of the first video frames;
inputting the first subset of the first video frames into a first-pass encoder to produce one or more first encoded bitstreams;
determining one or more first encoding parameters based on the one or more first encoded bitstreams; and
inputting the first video frames into a second-pass encoder applying the one or more first encoding parameters to produce one or more second encoded bitstreams, wherein the first-pass encoder is optionally faster than the second-pass encoder.

2. The method of claim 1, wherein determining that the first subset of the first video frames is relevant to the encoding process comprises:
determining that a starting video frame of the first shot is relevant to the encoding process.

3. The method of claim 1 or 2, wherein determining that the first subset of the first video frames is relevant to the encoding process comprises:
determining that one or more characteristics associated with the first subset of the first video frames crosses a complexity threshold.

4. The method of claim 3, wherein determining that the first subset of the first video frames is relevant to the encoding process comprises:
setting the complexity threshold used in comparing the one or more characteristics of a particular video frame based on a distance of the particular video frame from a shot boundary that bounds the first shot.

5. The method of claim 3, wherein determining that the first subset of the first video frames is relevant to the encoding process comprises:
setting the complexity threshold used in comparing the one or more characteristics of a particular video frame based on the characteristics associated with the first video frames of the first shot.

6. The method of any one of claims 1-5, wherein determining that the first subset of the first video frames is relevant to the encoding process comprises:
inputting the one or more first characteristics into a classifier model.

7. The method of any one of claims 1-6, wherein determining that the first subset of the first video frames is relevant to the encoding process comprises:
determining that a plurality of video frames at spaced intervals in the first video frames are relevant to the encoding process.

8. The method of any one of claims 1-7, further comprising:
determining one or more of an estimated bitrate and an estimated distortion of a remaining subset of the first video frames;
wherein determining the one or more first encoding parameters comprises determining the one or more first encoding parameters further based on one or more of the estimated bitrate and the estimated distortion.

9. The method of claim 8, wherein determining the one or more first encoding parameters comprises:
determining one or more measured bitrates and one or more measured distortions of the one or more first encoded bitstreams; and
determining one or more combined bitrates and one or more combined distortions associated with the one or more first encoded bitstreams based on one or more of the estimated bitrate, the estimated distortion, the one or more measured bitrates, and the one or more measured distortions.

10. The method of claim 9, wherein determining the one or more first encoding parameters comprises:
determining the one or more first encoding parameters based on the one or more combined bitrates and the one or more combined distortions associated with the one or more first encoded bitstreams.

11. The method of claim 9 or 10, wherein determining the one or more first encoding parameters comprises:
determining the one or more first encoding parameters based on a Convex-Hull of the one or more combined bitrates and the one or more combined distortions associated with the one or more first encoded bitstreams.

12. The method of any one of claims 1-11, further comprising:
determining, based on the characteristics, that second video frames of the video belong to a second shot;
determining that a second subset of the second video frames is relevant to the encoding process based on one or more second characteristics associated with the second subset of the second video frames;
inputting the second subset of the second video frames into the first-pass encoder to produce one or more third encoded bitstreams;
determining one or more second encoding parameters based on the one or more third encoded bitstreams; and
inputting the second video frames into the second-pass encoder applying the one or more second encoding parameters to produce one or more fourth encoded bitstreams.

13. One or more non-transitory computer-readable media storing instructions that, when executed by one or more processors, cause the one or more processors to perform a method according to any one of claims 1-12.

14. A system, comprising:
one or more processors; and
one or more non-transitory computer-readable media storing instructions that, when executed by the one or more processors, cause the one or more processors to perform a method according to any one of claims 1-12.

15. An apparatus comprising means to perform a method according to any one of claims 1-12.
